# EUROPEAN PATENT APPLICATION

(11) **EP 4 819 292 A1**
(43) Date of publication of application: **07.10.2026**
(21) Application number: 24895949.6
(22) Date of filing: 24.09.2024
(51) Int. Cl.: H01M 10/42, H02J 7/00

(54) **BATTERY MANAGEMENT SYSTEM, DISTRIBUTION BOX, BATTERY PACK, AND ELECTRIC DEVICE**

(30) Priority: 30.11.2023 CN 202323280735 U
(71) Applicant: BYD Company Limited, Shenzhen, Guangdong 518118 (CN)
(72) Inventor: WANG, Chengzhi, Shenzhen, Guangdong 518118 (CN); KUANG, Hongli, Shenzhen, Guangdong 518118 (CN); LIU, Yantao, Shenzhen, Guangdong 518118 (CN); LIU, Shaosheng, Shenzhen, Guangdong 518118 (CN); CHEN, Gang, Shenzhen, Guangdong 518118 (CN)
(74) Representative: Mathys & Squire
(86) International application number: PCT/CN2024/120878
(87) International publication number: WO 2025/112852

(57) **Abstract**

An electric device, comprising a battery pack. The battery pack comprises a distribution box; the distribution box comprises a battery management system; the battery management system comprises at least two functional modules and at least one connector; each functional module comprises a circuit board and a component arranged on the circuit board; and every two adjacent functional modules are stacked in the thickness direction of the functional modules and are electrically connected by means of the connector.

## Description

### CROSS-REFERENCE TO RELATED APPLICATIONS

The present disclosure claims priority to Chinese Patent Disclosure No. 202323280735.8 filed on November 30, 2023 and entitled "BATTERY MANAGEMENT SYSTEM, DISTRIBUTION BOX, BATTERY PACK, AND ELECTRIC DEVICE", which is incorporated herein by reference in its entirety.

### FIELD

The present invention relates to the field of vehicle technology, and in particular to a battery management system, a distribution box, a battery pack, and an electric device.

### BACKGROUND

In existing solutions, a Battery Management System (BMS) involves numerous wiring harnesses, terminals, and connection points, resulting in a relatively complex overall structure of the battery management system. In one aspect, this complicates the assembly of the battery management system; in another aspect, it also hinders the inspection and maintenance of the battery management modules.

### SUMMARY

An object of the present disclosure is to provide a battery management system, a distribution box, a battery pack, and an electric device, so as to solve the above technical problems.

To achieve the above object, a first aspect of the present disclosure provides a battery management system, which includes:
at least two functional modules, each functional module including a circuit board and a component arranged on the circuit board; and
at least one connector, and two adjacent functional modules are stacked in the thickness direction thereof and are electrically connected by means of the connector.

In some embodiments, the at least two functional modules include a first electrical interface module, and the first electrical interface module is one of a low-voltage electrical interface and a high-voltage electrical interface.

In some embodiments, the at least two functional modules include a second electrical interface module, and the second electrical interface module is the other one of the low-voltage electrical interface and the high-voltage electrical interface.

In some embodiments, the at least two functional modules include an intermediate module arranged between the first electrical interface module and the second electrical interface module. The first electrical interface module and the second electrical interface module are electrically connected to the intermediate module by means of the connector, respectively.

In some embodiments, the intermediate module includes at least one of a low-voltage electrical management module, a battery management control module, an electrical system isolation module, and a battery status monitoring module.

In some embodiments, the connector includes a connecting piece and a connecting mating piece. One of every two adjacent functional modules has the connecting piece, and the other of every two adjacent functional modules has the connecting mating piece. The connecting piece and the connecting mating piece provided on the two adjacent functional modules are arranged opposite each other and are electrically connected in a plug-in configuration.

In some embodiments, the at least two functional modules include a first electrical interface module, a second electrical interface module, and an intermediate module arranged between the first electrical interface module and the second electrical interface module.

The first electrical interface module has a first surface facing the intermediate module. The connecting piece is arranged on the first surface of the first electrical interface module and is electrically connected to the circuit board of the first electrical interface module.

The second electrical interface module has a first surface facing the intermediate module. The connecting mating piece is arranged on the first surface of the second electrical interface module and is electrically connected to the circuit board of the second electrical interface module.

The intermediate module has a first surface facing the first electrical interface module and a second surface facing the second electrical interface module. The connecting mating piece is arranged on the first surface of the intermediate module, and the connecting piece is arranged on the second surface of the intermediate module.

The connecting piece arranged on the first surface of the first electrical interface module and the connecting mating piece arranged on the first surface of the intermediate module are arranged opposite to each other and are electrically connected in a plug-in configuration. The connecting mating piece arranged on the first surface of the second electrical interface module and the connecting piece arranged on the second surface of the intermediate module are arranged opposite to each other and are electrically connected in a plug-in configuration.

In some embodiments, the connecting mating piece arranged on the first surface of the intermediate module and the connecting piece arranged on the second surface of the intermediate module are arranged offset from each other.

In some embodiments, a projection dimension of each functional module in the thickness direction is the same.

In some embodiments, the battery management system further includes a housing. The housing has an interior which includes a cavity inside for accommodating the at least two functional modules, and a shape and a size of a peripheral surface of each functional module match a shape and a size of an inner wall of the housing to ensure that the at least two functional modules are configured to be stacked in the thickness direction thereof in the cavity.

In some embodiments, the at least two functional modules include the first electrical interface module and the second electrical interface module. The housing has a first opening and a second opening respectively on two opposite side walls thereof.

The first electrical interface module is a low-voltage electrical interface module. The low-voltage electrical interface module includes a low-voltage electrical interface electrically connected to the circuit board of the low-voltage electrical interface module, and the low-voltage electrical interface extends through the first opening.

The second electrical interface module is a high-voltage electrical interface module. The high-voltage electrical interface module includes a high-voltage electrical interface electrically connected to the circuit board of the high-voltage electrical interface module, and the high-voltage electrical interface extends through the second opening.

In some embodiments, the housing includes a shell body and a shell cover. The shell body has an interior which defines the cavity and an opening communicating with the cavity. The shell cover is detachably sealed over the opening. One of the first opening and the second opening is on the shell cover, and the other is on a bottom wall of the shell body.

In some embodiments, the housing further includes an engaging block and a locking slot. One of the shell body and the shell cover has the engaging block, and the other of the shell body and the shell cover has the locking slot. The engaging block is configured to engage in the locking slot when the shell cover seals the opening of the shell body.

In some embodiments, the housing further includes a positioning member. The positioning member is arranged on the inner wall of the shell body and extends in a direction away from the bottom wall of the shell body.

An edge portion of each functional module has a retaining member that structurally matches the positioning member. The retaining member is connected to the positioning member to position the functional module within the housing.

In some embodiments, the positioning member is a protrusion protruding from the inner wall of the shell body toward the cavity, and the retaining member is a notch extending through the edge portion of the functional module along its own thickness. The positioning member sequentially extends through the notch of each functional module to engage the functional modules with the shell body.

Alternatively, the positioning member is a positioning groove on the inner wall of the shell body, extending in the direction away from the bottom wall of the shell body, and the retaining member is a protrusion arranged on the edge portion of the functional module. Each protrusion sequentially extends through the positioning groove to engage the functional module with the shell body.

A second aspect of the present disclosure provides a distribution box, which includes the battery management system as described above.

A third aspect of the present disclosure provides a battery pack, which includes the battery management system or the distribution box as described above.

A fourth aspect of the present disclosure provides an electric device, which includes the distribution box or the battery pack as described above.

With the above technical solution, the battery management system includes a plurality of the functional modules, and each functional module has circuit boards and components connected to the circuit boards. Thus, when assembling the battery management system, it is only necessary to stack the functional modules in the thickness direction thereof and connect by means of the connector to achieve electrical connection between two adjacent functional modules. This facilitates rapid assembly of the battery management system by operators and can effectively improve assembly efficiency.

Furthermore, when inspecting or maintaining this battery management system, because each functional module is relatively independently arranged, in one aspect, maintenance personnel can quickly locate and repair the functional module corresponding to a problem, reducing inspection difficulty and effectively improving maintenance efficiency; in another aspect, when a problem is found with a specific functional module during inspection, the entire functional module can be directly replaced, thereby significantly shortening the maintenance cycle of the battery management system. Additionally, when the plurality of the functional modules are stacked in the thickness direction, they occupy a smaller footprint area, thus effectively reducing space occupancy and being more conducive to the miniaturization of the battery management system.

Other features and advantages of the present disclosure will be described in detail in the subsequent detailed description.

### BRIEF DESCRIPTION OF THE DRAWINGS

The accompanying drawings are provided for further understanding of the present disclosure, constitute a part of the specification, and are used together with the following detailed description to explain the present disclosure, but do not constitute a limitation to the present disclosure. In the drawings:
FIG. 1 is an exploded schematic diagram of a battery management system according to an exemplary embodiment of the present disclosure.
FIG. 2 is a perspective schematic diagram of a battery management system according to an exemplary embodiment of the present disclosure, in which functional modules are arranged within a cavity of a housing.
FIG. 3 is a structural block diagram of a distribution box according to an embodiment of the present disclosure.
FIG. 4 is a structural block diagram of a battery pack according to an embodiment of the present disclosure.
FIG. 5 is a structural block diagram of a battery pack according to another embodiment of the present disclosure.
FIG. 6 is a structural block diagram of an electric device according to an embodiment of the present disclosure.
FIG. 7 is a structural block diagram of an electric device according to another embodiment of the present disclosure.

### DETAILED DESCRIPTION

The specific embodiments of the present disclosure will be described in detail below with reference to the accompanying drawings. It will be understood that the specific embodiments described herein are only used to illustrate and explain the present disclosure and are not intended to limit the present disclosure.

In the present disclosure, unless stated otherwise, the directional terms used are defined based on the orientation shown in the accompanying drawings, merely for the convenience of describing the present disclosure and simplifying the description, rather than indicating or implying that the referred apparatus or element must have a specific orientation or be constructed and operated in a specific orientation. Therefore, such terms will not be construed as limiting the present disclosure. The terms "inner" and "outer" refer to the inside and outside of the contour of the corresponding structure.

Furthermore, it will be noted that terms such as "first" and "second" are used to distinguish one element from another and do not imply sequence or importance. Also, in the description referring to the drawings, the same reference numerals in different drawings denote the same elements.

In the description of the present disclosure, it will also be noted that, unless explicitly specified and limited otherwise, the terms "arranged", "connected", "coupled", and "mounted" will be interpreted broadly. For example, a connection may be a fixed connection, a detachable connection, or an integral connection; it may be a direct connection, or an indirect connection through an intermediate medium. Those of ordinary skill in the art will understand the specific meanings of the above terms in the present disclosure according to specific situations.

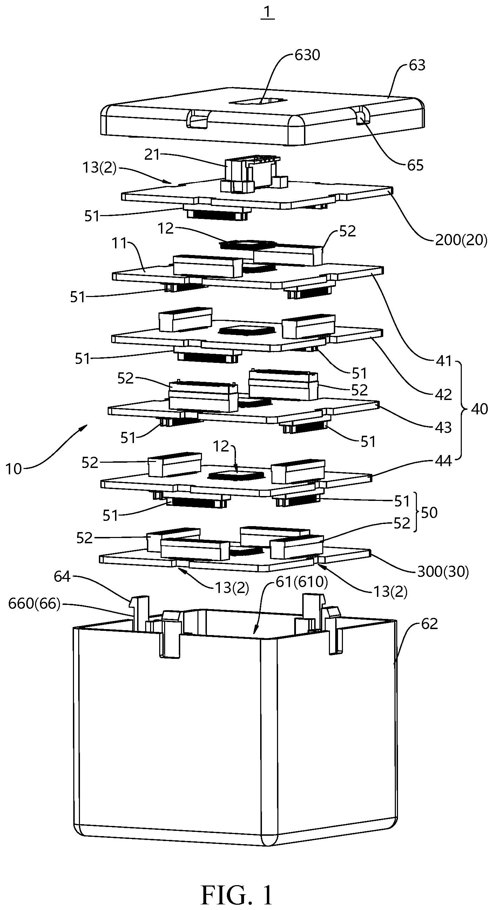

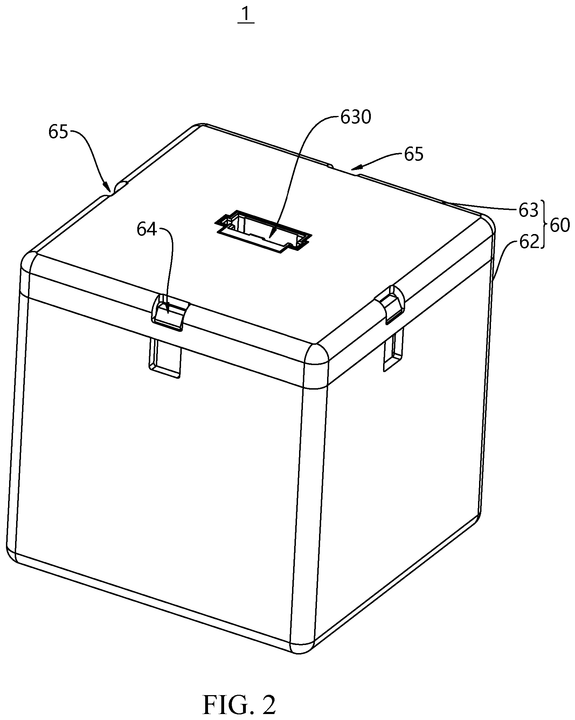

As a battery management system involves components such as contactors, fuses, precharge resistors, shunts, terminals, and connectors, the pins, connecting pieces, bolts, terminals, and wiring harnesses used to connect or assemble these components are often interwoven, which increases the difficulty of assembling the battery management system and hinders subsequent inspection and maintenance. Based hereon, referring to FIG. 1 to FIG. 2, a first aspect of the present disclosure provides a battery management system 1, including at least two functional modules 10 and at least one connector 50. Each functional module 10 includes a circuit board 11 and a component 12 arranged on the circuit board 11. Two adjacent functional modules 10 are stacked in the thickness direction thereof and are electrically connected by means of the connector 50.

With the above technical solution, the battery management system 1 includes a plurality of the functional modules 10, and each functional module 10 has a circuit board 11 and a component 12 connected to the circuit board 11. That is, each functional module 10 can achieve different functions. Thus, when assembling the battery management system 1, it is only necessary to achieve electrical connection between two adjacent functional modules 10 by means of the connector. This facilitates rapid assembly of the battery management system 1 by operators and can effectively improve assembly efficiency.

Furthermore, when inspecting or maintaining this battery management system 1, because each functional module 10 is relatively independently arranged, in one aspect, maintenance personnel can quickly locate and repair the functional module 10 corresponding to a problem, reducing inspection difficulty and effectively improving maintenance efficiency. In another aspect, when a problem is found with a specific functional module 10 during inspection, the entire functional module 10 can be directly replaced, thereby significantly shortening the maintenance cycle of the battery management system 1. Additionally, when the plurality of functional modules 10 are stacked in the thickness direction, they occupy a smaller footprint area, thus effectively reducing space occupancy and being more conducive to the miniaturization of the battery management system 1.

In the present disclosure, there is no limitation on the number of connectors connecting two adjacent functional modules 10. For example, in an exemplary embodiment of the present disclosure, two adjacent functional modules 10 may be connected via two functional modules 10. The two functional modules 10 are symmetrically arranged on both sides of the circuit board, which can further enhance the stability during the mechanical connection of the two functional modules 10 while achieving electrical connection.

Furthermore, to facilitate the connection between the functional modules 10 and a battery energy distribution unit, the at least two functional modules 10 may include a first electrical interface module 20. The present disclosure imposes no limitation on the specific type and function of the first electrical interface module 20. For example, in an exemplary embodiment provided by the present disclosure, the first electrical interface module 20 may be one of a low-voltage electrical interface 21 and a high-voltage electrical interface. Additionally, the at least two functional modules 10 may further include a second electrical interface module 30, the second electrical interface module 30 is the other of the low-voltage electrical interface 21 and the high-voltage electrical interface. In this way, the first electrical interface module 20 and the second electrical interface module 30 (i.e., the low-voltage electrical interface 21 and the high-voltage electrical interface) can achieve rapid electrical connection with functional modules 10 adjacent thereto by means of the connector 50, thereby facilitating the assembly between the first electrical interface module 20, the second electrical interface module 30, and the battery energy distribution unit.

The at least two functional modules 10 include an intermediate module 40. The intermediate module 40 is arranged between the first electrical interface module 20 and the second electrical interface module 30. The first electrical interface module 20 and the second electrical interface module 30 are electrically connected to the intermediate module 40 by means of the connector 50, respectively. Thus, connection with the battery energy distribution unit can be achieved through the first electrical interface module 20 and the second electrical interface module 30, while the intermediate module 40 arranged between them can achieve electrical connection with the first electrical interface module 20 and the second electrical interface module 30 by means of the connector 50. This way, when the intermediate module 40 fails, it can be directly detached from between the first electrical interface module 20 and the second electrical interface module 30 for repair or replacement, making it more convenient for operators.

In an exemplary embodiment of the present disclosure, the intermediate module 40 may include at least one of a low-voltage electrical management module 41, a battery management control module 42, an electrical system isolation module 43, and a battery status monitoring module 44. Different functional modules 10 can achieve different functions. Thus, when a problem or failure occurs in the battery management system 1 of the present disclosure, maintenance personnel can quickly locate the functional module 10 corresponding to the problem and repair or replace the corresponding functional module 10, thereby improving maintenance efficiency.

It will be noted that the present disclosure imposes no limitation on the stacking order of the functional modules 10. Designers can adaptively adjust the stacking order of the functional modules 10 according to specific situations. For example, in an exemplary embodiment of the present disclosure, the first electrical interface module 20, the low-voltage electrical management module 41, the battery management control module 42, the electrical system isolation module 43, the battery status monitoring module 44, and the second electrical interface module 30 may be stacked sequentially in a top-to-bottom direction.

Furthermore, the present disclosure imposes no limitation on the specific structure of the connector 50, if electrical connection between two adjacent functional modules 10 can be achieved. For example, in the present disclosure, the connector 50 includes a connecting piece 51 and a connecting mating piece 52. One of every two adjacent functional modules 10 has the connecting piece 51, and the other one has the connecting mating piece 52. The connecting piece 51 and the connecting mating piece 52 on the two adjacent functional modules 10 are arranged opposite to each other and are electrically connected in a plug-in configuration. In this way, a simple plugging/unplugging action can achieve connection and disconnection between the two adjacent functional modules 10. Moreover, when the connecting piece 51 and the connecting mating piece 52 are plugged together, the connection and fixation of the two adjacent functional modules 10 can be achieved without the need for fasteners.

Alternatively, in one embodiment of the present disclosure, the connector 50 may be a plug-in terminal block; and the plug-in terminal block includes two parts (i.e., the connecting piece 51 and the connecting mating piece 52). Or, in another exemplary embodiment of the present disclosure, the connector 50 may include two cooperating wires or quick-connect terminals.

In some embodiments, the at least two functional modules 10 include a first electrical interface module 20, a second electrical interface module 30, an intermediate module 40 arranged between the first electrical interface module 20 and the second electrical interface module 30, and the first electrical interface module 20 has a first surface facing the intermediate module 40. The connecting piece 51 is arranged on the first surface of the first electrical interface module 20 and is electrically connected to the circuit board 11 of the first electrical interface module 20. The second electrical interface module 30 has a first surface facing the intermediate module 40. The connecting mating piece 52 is arranged on the first surface of the second electrical interface module 30 and is electrically connected to the circuit board 11 of the second electrical interface module 30. The intermediate module 40 has a first surface facing the first electrical interface module 20 and a second surface facing the second electrical interface module 30. The connecting mating piece 52 is arranged on the first surface of the intermediate module 40, and the connecting piece 51 is arranged on the second surface of the intermediate module 40. The connecting piece 51 arranged on the first surface of the first electrical interface module 20 and the connecting mating piece 52 arranged on the first surface of the intermediate module 40 are arranged opposite to each other and are electrically connectable in a plug-in configuration. The connecting mating piece 52 arranged on the first surface of the second electrical interface module 30 and the connecting piece 51 arranged on the second surface of the intermediate module 40 are arranged opposite to each other and are electrically connectable in a plug-in configuration.

In this way, the connecting piece 51 arranged on the first surface of the first electrical interface module 20 and the connecting mating piece 52 arranged on the first surface of the intermediate module 40 can achieve electrical and structural connection between the first electrical interface module 20 and the intermediate module 40. The connecting mating piece 52 arranged on the first surface of the second electrical interface module 30 and the connecting piece 51 arranged on the second surface of the intermediate module 40 can achieve electrical and structural connection between the second electrical interface module 30 and the intermediate module 40, thereby achieving structural and electrical connection among the first electrical interface module 20, the intermediate module 40, and the second electrical interface module 30.

For an embodiment where the intermediate module 40 includes the low-voltage electrical management module 41, the battery management control module 42, the electrical system isolation module 43, and the battery status monitoring module 44, the low-voltage electrical management module 41 has a first surface facing the first electrical interface module 20 and a second surface facing the second electrical interface module 30. The connecting mating piece 52 is arranged on the first surface of the low-voltage electrical management module 41, and the connecting piece 51 is arranged on the second surface of the low-voltage electrical management module 41. Similarly, the battery management control module 42, the electrical system isolation module 43, and the battery status monitoring module 44 also respectively have a first surface facing the first electrical interface module 20 and a second surface facing the second electrical interface module 30. The connecting mating piece 52 is arranged on the first surface of each battery management control module 42, the electrical system isolation module 43, and the battery status monitoring module 44, and the connecting piece 51 is arranged on their respective second surfaces. Structural and electrical connection between adjacent functional modules 10 can be achieved by means of the connecting piece 51 and the connecting mating piece 52.

In the present disclosure, there is no limitation on the number of connecting pieces 51 provided on two adjacent functional modules 10. For example, in an exemplary embodiment provided by the present disclosure, two of the aforementioned connectors 50 may be arranged between the first electrical interface module 20 and the intermediate module 40. For an embodiment where the intermediate module 40 includes the low-voltage electrical management module 41, the battery management control module 42, the electrical system isolation module 43, and the battery status monitoring module 44, two connectors 50 may also be arranged between the two adjacent functional modules 10. For the intermediate module 40 (i.e., the battery status monitoring module 44) connected to the second electrical interface module 30, four connectors 50 may be used for electrical connection between the second electrical interface module 30 and the battery status monitoring module 44. That is, four connecting pieces 51 are arranged on the second surface of the battery status monitoring module 44, and four connecting mating pieces 52 are arranged on the first surface of the second electrical interface module 30, with each connecting piece 51 corresponding to one connecting mating piece 52.

It will be noted here that by arranging different types of connectors 50 between functional modules 10, functions such as communication and sampling between two adjacent functional modules 10 can be achieved. Compared to other functional modules 10 connected by means of two connectors 50, the connection by means of four connectors 50 between the second electrical interface module 30 and the battery status monitoring module 44 can also achieve functions such as charge/discharge management and energy monitoring.

In some embodiments, the connecting mating piece 52 arranged on the first surface of the intermediate module 40 and the connecting piece 51 arranged on the second surface of the intermediate module 40 are arranged offset from each other. Because the connecting mating piece 52 arranged on the first surface and the connecting piece 51 arranged on the second surface of the intermediate module 40 are arranged offset, i.e., the connecting mating piece 52 and the connecting piece 51 are arranged on different sides of the intermediate module 40, interference between the connecting piece 51 and the connecting mating piece 52 during assembly can thus be avoided.

In some embodiments, a projection dimension of each functional module 10 in the thickness direction is the same. In one aspect, functional modules 10 with the same dimensions facilitate modular production. In another aspect, because the projection dimension of each functional module 10 in the thickness direction is the same, when the plurality of the functional modules 10 are stacked together, they occupy a smaller space, thereby enhancing the integration level of the battery management system 1.

In some embodiments, the battery management system 1 further includes a housing 60. The housing 60 has an interior including a cavity 61 for accommodating the at least two functional modules 10. A shape and a size of a peripheral surface of each functional module 10 match a shape and a size of an inner wall of the housing 60, such that the at least two functional modules 10 can be stacked in the thickness direction thereof in the cavity 61. The housing 60 can protect the functional modules 10. Furthermore, because the shape and size of the functional modules 10 match the shape and size of the inner wall of the housing 60, placing the at least two functional modules 10 into the cavity 61 is facilitated, minimizing waste of space within the cavity 61.

In an embodiment where the at least two functional modules 10 include a first electrical interface module 20 and a second electrical interface module 30, the housing 60 has a first opening 630 and a second opening (not shown) respectively on two opposite side walls thereof. The first electrical interface module 20 is a low-voltage electrical interface module 200. The low-voltage electrical interface module 200 includes a low-voltage electrical interface 21 electrically connected to the circuit board 11 of the low-voltage electrical interface module 200 and the low-voltage electrical interface 21 extends through the first opening 630. The second electrical interface module 30 is a high-voltage electrical interface module 300. The high-voltage electrical interface module 300 includes a high-voltage electrical interface (not shown) electrically connected to the circuit board 11 of the high-voltage electrical interface module 300 and the high-voltage electrical interface extends through the second opening. The first opening 630 in the housing 60 allows the low-voltage electrical interface 21 to pass through, and the second opening in the housing 60 allows the high-voltage electrical interface to pass through, thereby achieving electrical connection with related structures of a battery pack.

It will be noted that the present disclosure imposes no limitation on the specific types of the aforementioned first electrical interface module 20 and second electrical interface module 30. For example, one of the first electrical interface module 20 and the second electrical interface module 30 may be a medium-voltage electrical interface module, and the other may be a high-voltage electrical interface module. Or, one of the first electrical interface module 20 and the second electrical interface module 30 may be the low-voltage electrical interface module 200, and the other may be a medium-voltage electrical interface module. Specific configurations can be adjusted according to actual requirements.

Moreover, for the embodiment where each functional module 10 has the same size, the plurality of stacked functional modules 10 can also be accommodated within the cavity 61 with a smaller volume, thereby reducing the volume occupation within the cavity 61 and enhancing the integration level of the battery management system 1.

In some embodiments, the housing 60 includes a shell body 62 and a shell cover 63. The shell body 62 has an interior which defines the cavity 61 and an opening 610 communicating with the cavity 61. The shell cover 63 is detachably sealed over the opening 610. One of the first opening 630 and the second opening is on the shell cover 63, and the other is on a bottom wall of the shell body 62. Since the first opening 630 and the second opening are located on the shell cover 63 and the bottom wall of the shell body 62 respectively, and there is a certain distance between them, interference between the high-voltage electrical interface and the low-voltage electrical interface 21 when connected to the battery pack 4 can be avoided, thereby reducing safety hazards during operation of the battery management system 1.

The present disclosure imposes no limitation on the detachable configuration between the shell body 62 and the shell cover 63. For example, in an exemplary embodiment of the present disclosure, the housing 60 may further include an engaging block 64 and a locking slot 65. One of the shell body 62 and the shell cover 63 has the engaging block 64, and the other of the shell body 62 and the shell cover 63 has the locking slot 65. The engaging block 64 is configured to engage in the locking slot 65 when the shell cover 63 seals the opening 610 of the shell body 62. The detachable connection between the shell body 62 and the shell cover 63 is achieved by engaging, which is structurally simple and allows for the disassembly of the shell body 62 and the shell cover 63 without the need for disassembly tools.

In another exemplary embodiment of the present disclosure, an outer surface of the shell body 62 may have external threads, and an inner surface of the shell cover 63 may have internal threads. The shell body 62 and the shell cover 63 are connected by means of the threads.

In some embodiments, the housing 60 may further include a positioning member 66. The positioning member 66 is arranged on an inner wall of the shell body 62 and extends in a direction away from the bottom wall of the shell body 62. An edge portion of each functional module 10 has a retaining member 2 that structurally matches the positioning member 66. The retaining member 2 is connected to the positioning member 66 to position the functional module 10 within the housing 60. In this way, after placing the functional modules 10 into the cavity 61, the positioning member 66 can sequentially engage with the retaining members on the edge portion of each functional module 10, thereby achieving positioning and retaining of each functional module 10 to enhance the stability of each functional module 10 within the cavity 61.

In the present disclosure, there is no specific limitation on the structure and engagement configuration of the positioning member 66 and retaining member. For example, in an exemplary embodiment of the present disclosure, optionally, the positioning member 66 may be a protrusion 660 protruding from the inner wall of the shell body 62 toward the cavity 61, and the retaining member 2 may be a notch 13 extending through the edge portion of the functional module 10 along its own thickness. The positioning member 66 sequentially extends through the notch 13 of each functional module 10 to engage the functional module 10 with the shell body 62. Thus, during the process of mounting the functional modules 10 into the cavity 61, the protrusion 660 on the inner wall of the shell body 62 can sequentially extend through the notch 13 of each functional module 10, thereby providing restriction and guidance for each functional module 10.

Alternatively, in another exemplary embodiment of the present disclosure, the positioning member 66 may be a positioning groove extending from the inner wall of the shell body 62 in the direction away from the bottom wall of the shell body 62, and the retaining member 2 may be a protrusion arranged on the edge portion of the functional module 10. Each protrusion sequentially extends through the positioning groove to engage the functional module 10 with the shell body 62. Similarly, during the process of mounting the functional modules 10 into the cavity 61, the protrusion on each functional module 10 can all extend through the positioning groove on the inner wall of the shell body 62. Thereby, under the retaining effect of the positioning groove, restriction and guidance for each functional module 10 are achieved.

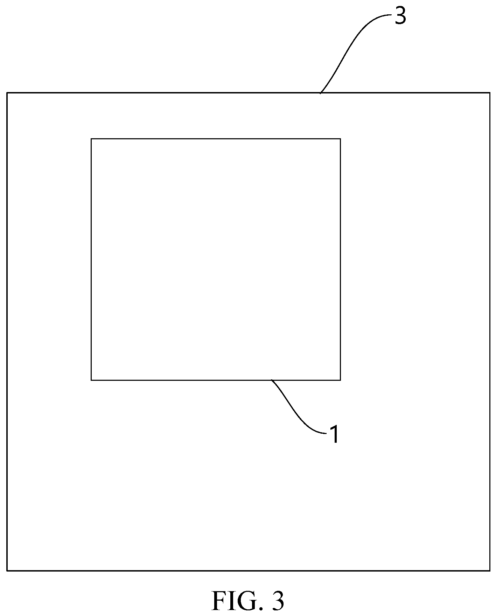

As shown in FIG. 3, a second aspect of the present disclosure provides a distribution box 3, including the battery management system 1 as described above.

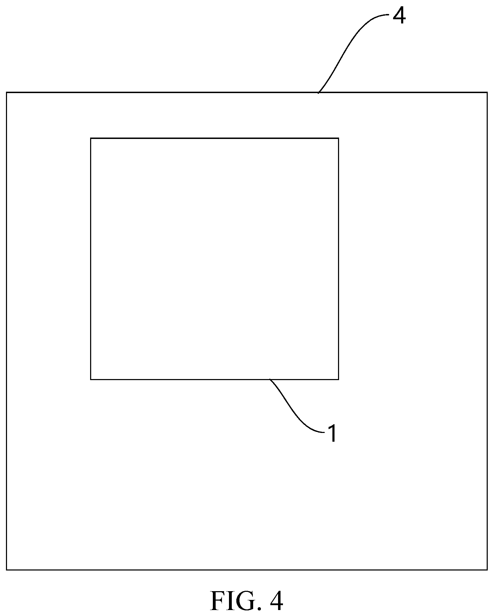

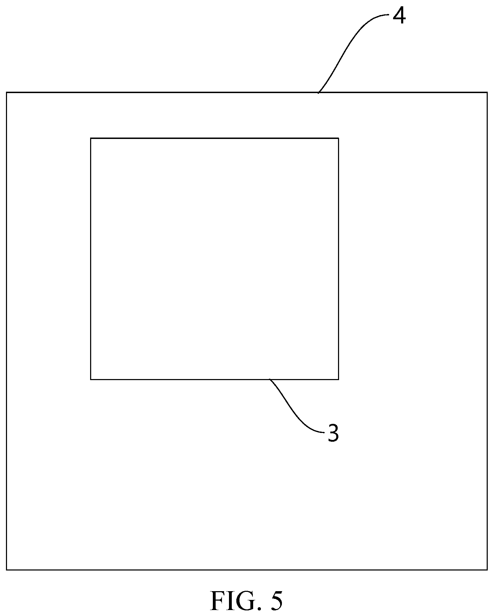

As shown in FIG. 4 to FIG. 5, a third aspect of the present disclosure provides a battery pack 4, including the battery management system 1 or the distribution box 3 as described above.

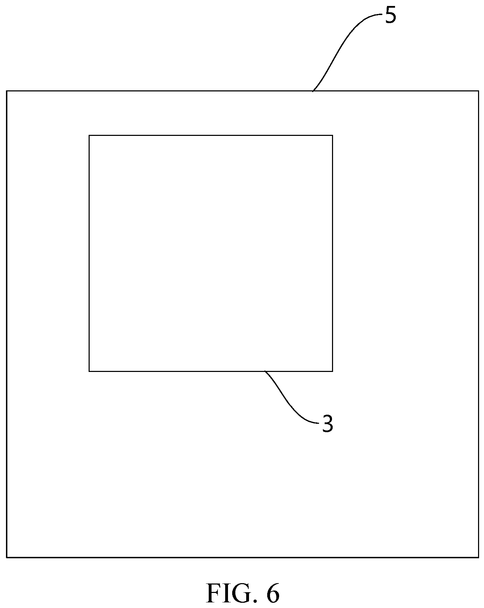

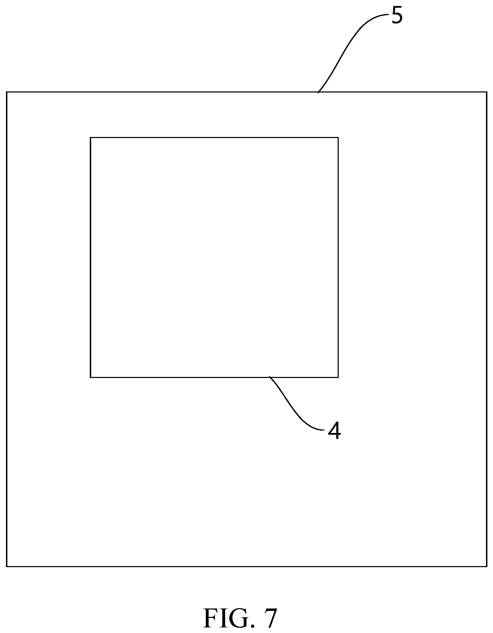

As shown in FIG. 6 to FIG. 7, a fourth aspect of the present disclosure provides an electric device 5, including the distribution box 3 or the battery pack 4 as described above. The battery pack 4 and the electric device have all the beneficial effects of the distribution box 3 and battery management system 1, which will not be repeated herein. The electric device 5 may be any device with power demand, such as a vehicle, an energy storage cabinet, an aircraft, etc., which is not specifically limited by the present disclosure.

The preferred embodiments of the present disclosure have been described in detail above with reference to the accompanying drawings. However, the present disclosure is not limited to the specific details in the above embodiments. Within the scope of the technical concept of the present disclosure, various simple modifications can be made to the technical solutions of the present disclosure, and all such simple modifications fall within the protection scope of the present disclosure.

Furthermore, it will be noted that the various specific technical features described in the above detailed embodiments can be combined in any suitable manner, provided there is no conflict. To avoid unnecessary repetition, the present disclosure will not further describe the various possible combinations.

In addition, the various different embodiments of the present disclosure can also be combined arbitrarily, as long as they do not violate the spirit of the present disclosure, and will also be considered as the content disclosed herein.

## Claims

1. A battery management system (1), comprising:
at least two functional modules (10), each functional module (10) comprising a circuit board (11) and a component (12) arranged on the circuit board (11); and
at least one connector (50), two adjacent functional modules (10) being stacked in the thickness direction thereof and being electrically connected by means of the connector (50).

2. The battery management system (1) according to claim 1, wherein the at least two functional modules (10) comprise a first electrical interface module (20), the first electrical interface module (20) being one of a low-voltage electrical interface (21) and a high-voltage electrical interface.

3. The battery management system (1) according to claim 2, wherein the at least two functional modules (10) comprise a second electrical interface module (30), the second electrical interface module (30) being the other of the low-voltage electrical interface (21) and the high-voltage electrical interface.

4. The battery management system (1) according to claim 3, wherein the at least two functional modules (10) comprise an intermediate module (40), the intermediate module (40) being arranged between the first electrical interface module (20) and the second electrical interface module (30), and the first electrical interface module (20) and the second electrical interface module (30) being electrically connected to the intermediate module (40) by means of the connector (50), respectively.

5. The battery management system (1) according to claim 4, wherein,
the intermediate module (40) comprises at least one of a low-voltage electrical management module (41), a battery management control module (42), an electrical system isolation module (43), and a battery state monitoring module (44).

6. The battery management system (1) according to any one of claims 1 to 5, wherein the connector (50) comprises a connecting piece (51) and a connecting mating piece (52), one of every two adjacent functional modules (10) having the connecting piece (51), and the other one of every two adjacent functional modules (10) having the connecting mating piece (52), and the connecting piece (51) and the connecting mating piece (52) on the two adjacent functional modules (10) being arranged opposite each other and being electrically connected in a plug-in configuration.

7. The battery management system (1) according to claim 6, wherein the at least two functional modules (10) comprise a first electrical interface module (20), a second electrical interface module (30), and an intermediate module (40) arranged between the first electrical interface module (20) and the second electrical interface module (30);
the first electrical interface module (20) having a first surface facing the intermediate module (40), and the connecting piece (51) arranged on the first surface of the first electrical interface module (20) and electrically connected to the circuit board (11) of the first electrical interface module (20);
the second electrical interface module (30) having a first surface facing the intermediate module (40), and the connecting mating piece (52) arranged on the first surface of the second electrical interface module (30) and electrically connected to the circuit board (11) of the second electrical interface module (30);
the intermediate module (40) having a first surface facing the first electrical interface module (20) and a second surface facing the second electrical interface module (30), the connecting mating piece (52) arranged on the first surface of the intermediate module (40), and the connecting piece (51) arranged on the second surface of the intermediate module (40);
the connecting piece (51) arranged on the first surface of the first electrical interface module (20) and the connecting mating piece (52) arranged on the first surface of the intermediate module (40) being arranged opposite to each other and being electrically connected in a plug-in configuration, and the connecting mating piece (52) arranged on the first surface of the second electrical interface module (30) and the connecting piece (51) arranged on the second surface of the intermediate module (40) being arranged opposite to each other and being electrically connected in a plug-in configuration.

8. The battery management system (1) according to claim 7, wherein the connecting mating piece (52) arranged on the first surface of the intermediate module (40) and the connecting piece (51) arranged on the second surface of the intermediate module (40) are arranged offset from each other.

9. The battery management system (1) according to any one of claims 1 to 8, wherein a projection dimension of each functional module (10) in the thickness direction is the same.

10. A battery management system (1) according to any one of claims 1 to 9, wherein the battery management system (1) further comprises a housing (60), the housing (60) having an interior comprising a cavity (61) for accommodating the at least two functional modules (10), and a shape and a size of a peripheral surface of each functional module (10) matching a shape and a size of an inner wall of the housing (60), to ensure that at least two functional modules (10) can be stacked in the thickness direction thereof in the cavity (61).

11. The battery management system (1) according to claim 10, wherein the at least two functional modules (10) comprise the first electrical interface module (20) and the second electrical interface module (30); the housing (60) has a first opening (630) and a second opening respectively on two opposite side walls thereof;
the first electrical interface module (20) being a low-voltage electrical interface module (200), the low-voltage electrical interface module (200) comprising the low-voltage electrical interface (21) electrically connected to the circuit board (11) of the low-voltage electrical interface module (200), and the low-voltage electrical interface (21) extending through the first opening (630);
the second electrical interface module (30) being a high-voltage electrical interface module (300), the high-voltage electrical interface module (300) comprising the high-voltage electrical interface electrically connected to the circuit board (11) of the high-voltage electrical interface module (300), and the high-voltage electrical interface extending through the second opening.

12. The battery management system (1) according to claim 11, wherein the housing (60) comprises a shell body (62) and a shell cover (63), the shell body (62) having an interior which defines the cavity (61) and an opening (610) communicating with the cavity (61), the shell cover (63) being detachably sealed over the opening (610), one of the first opening (630) and the second opening being on the shell cover (63), and the other being on a bottom wall of the shell body (62).

13. The battery management system (1) according to claim 12, wherein the housing (60) further comprises an engaging block (64) and a locking slot (65), one of the shell body (62) and the shell cover (63) having the engaging block (64), and the other of the shell body (62) and the shell cover (63) having the locking slot (65), and the engaging block (64) configured to engage in the locking slot (65) when the shell cover (63) seals the opening (610) of the shell body (62).

14. The battery management system (1) according to claim 12, wherein the housing (60) further comprises a positioning member (66), the positioning member (66) being arranged on the inner wall of the shell body (62) and extending in a direction away from the bottom wall of the shell body (62);
an edge portion of each functional module (10) having a retaining member (2) that structurally matches the positioning member (66), the retaining member (2) being connected to the positioning member (66) to position the functional module (10) within the housing (60).

15. The battery management system (1) according to claim 14, wherein the positioning member (66) is a protrusion (660) protruding from the inner wall of the shell body (62) toward the cavity (61), and the retaining member (2) is a notch (13) extending through the edge portion of the functional module (10) along its own thickness, the positioning member (66) extends through the notch (13) of each functional module (10) to engage the functional module (10) with the shell body (62);
alternatively, the positioning member (66) is a positioning groove extending from the inner wall of the shell body (62) in the direction away from the bottom wall of the shell body (62), and the retaining member (2) is a protrusion arranged on the edge portion of the functional module (10), each protrusion extends through the positioning groove to engage the functional module (10) with the shell body (62).

16. A distribution box (3), comprising the battery management system (1) according to any one of claims 1 to 15.

17. A battery pack (4), comprising the battery management system (1) according to any one of claims 1 to 15, or the distribution box (3) according to claim 16.

18. An electric device (5), comprising the distribution box (3) according to claim 16 or the battery pack (4) according to claim 17.
